# EUROPEAN PATENT SPECIFICATION

(11) **EP 4 509 362 B1**
(45) Date of publication and mention of the grant of the patent: **04.03.2026**
(21) Application number: 23306375.9
(22) Date of filing: 14.08.2023
(51) Int. Cl.: B60Q 3/217, B60Q 3/41, B60Q 3/78, B61D 29/00, F21S 43/14, F21S 43/15, F21S 4/22, F21W 106/00, F21Y 103/10, F21Y 115/10

(54) **ELONGATED LIGHTING DEVICE FOR VEHICLE**
LÄNGLICHE BELEUCHTUNGSVORRICHTUNG FÜR EIN FAHRZEUG
DISPOSITIF D'ÉCLAIRAGE ALLONGÉ POUR VÉHICULE

(43) Date of publication of application: 19.02.2025
(73) Proprietor: ALSTOM Holdings, 93400 Saint-Ouen-sur-Seine (FR)
(72) Inventor: PULIDO-PLAUCHUD, Maria-Fernanda, 59770 MARLY (FR); DUQUENOY, Steve, 59290 WASQUEHAL (FR)
(74) Representative: Plasseraud IP

(56) References cited:
- EP-A1- 1 533 205
- WO-A1-2021/083611
- CN-A- 104 554 031
- CN-U- 210 891 186
- DE-U1- 202022 103 749
- JP-B2- 4 597 786
- US-A1- 2010 277 898
- US-A1- 2017 072 841
- US-B1- 11 167 691

## Description

The present invention concerns a lighting assembly comprising a lightning device, said device comprising a profile support of elongated shape and a lighting element ; the profile support comprising a first and a second compartments separated by an inner wall, the first and the second compartments comprising respectively a first and a second openings extending along the elongated shape of the profile support. DE202022103749U1 discloses such a lighting assembly.

Inner compartments of vehicles are advantageously provided with compact lighting devices generating a qualitative light effect. Such a lighting device is disclosed in document US8955998.

In railway vehicles, the communication between inner compartments is typically formed by gangways with curved archways. It is advantageous to provide such archways with specific lighting devices, in an esthetic and cost-effective manner.

For this purpose, the invention relates to a lighting assembly of the aforementioned type, comprising the features of claim 1.

According to preferred embodiments, the lighting assembly may include one or more of the following features, considered alone or in any technically possible combination :
- the first opening faces a concavity or a convexity of the at least one curved part of the profile support ;
- the profile support comprises a first assembling organ extending along the elongated shape in the first compartment; and the lighting element comprises a second assembling organ coupled to the first assembling organ along the elongated shape ;
- one of the first and second assembling organs comprises a rib and the other of the first and second assembling organs comprises a groove ;
- the second opening faces a concavity or a convexity of the at least one curved part of the profile support ;
- the profile support comprises a third assembling organ extending along the elongated shape in the second compartment; and the flexible band comprises a fourth assembling organ coupled to the third assembling organ along the elongated shape ;
- one of the third and fourth assembling organs comprises a lip and the other of the third and fourth assembling organs comprises a groove ;
- the profile support is made of aluminum.

The invention also relates to a vehicle comprising a lighting assembly as described above.

The invention will be easier to understand in view of the following description, provided solely as an example, and with reference to the appended drawings, wherein :
- Figure 1 is a detailed, schematic view of a vehicle comprising a lighting assembly according to an embodiment of the invention ; and
- Figure 2 is a detailed, cross-sectional view of the vehicle and lighting device of Figure 1.

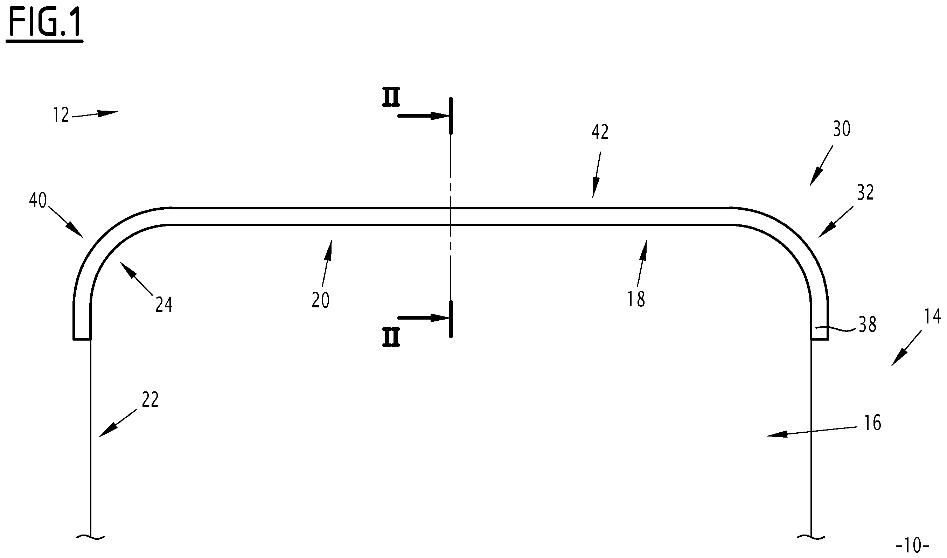

Figure 1 shows a vehicle 10 according to an embodiment of the invention. Preferably, the vehicle 10 is a land vehicle such as a railway vehicle.

The vehicle 10 comprises an inner compartment 12 delimited by at least one substantially vertical wall 14. Said wall 14 comprises a wall opening 16, giving access to another compartment of the vehicle 10.

The wall opening 16 is delimited by an edge 18. In the embodiment of Figure 1, the edge 18 comprises : a horizontal area 20, situated at the top of the wall opening 16 ; a first and a second vertical areas 22, situated on either sides of the wall opening 16 ; and a first and a second curved areas 24, joining the horizontal area 20 respectively with the first and with the second vertical areas 22.

The vehicle 10 also comprises a lighting device 30, fixed to the edge 18 of the wall opening 16.

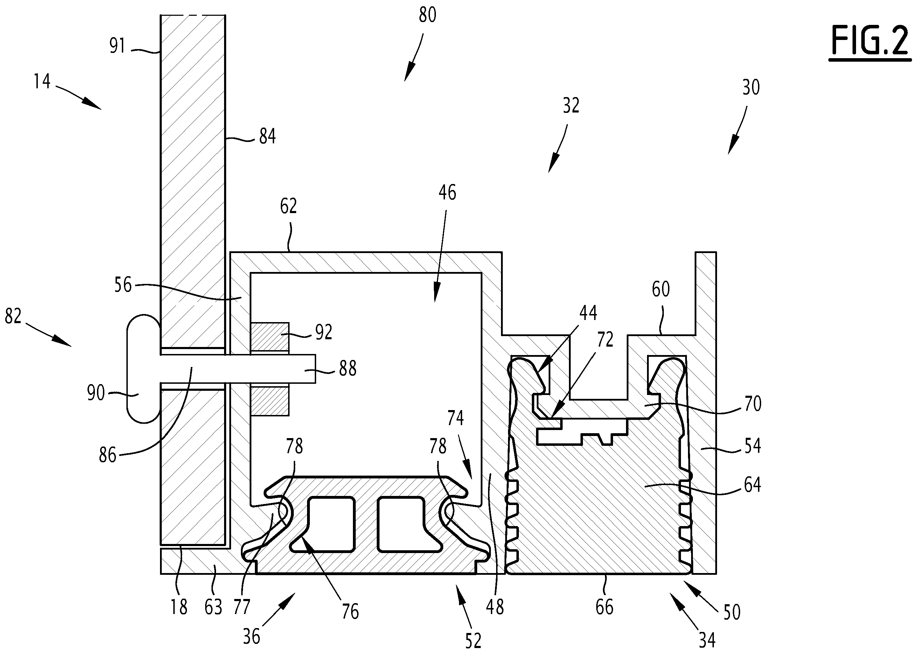

The lighting device 30, shown on Figure 2, comprises : a profile support 32 ; a lighting element 34 ; and a flexible closing band 36.

The profile support 32 has an elongated shape extending along a tangential direction, between a first and a second ends 38.

The profile support 32 comprises at least one curved part 40 along the elongated shape. In the embodiment of Figures 1 and 2, the profile support 32 comprises : a rectilinear part 42 ; and a first and a second curved parts 40, disposed respectively at the first and at the second ends 38 of the profile support 32.

In the embodiment of Figures 1 and 2, the profile support 32 substantially extends in a single plane including the rectilinear part 42 and the first and second curved parts 40.

In the embodiment of Figures 1 and 2, the profile support 32 has a plane of symmetry, corresponding to the cross-sectional plane of Figure 2. The first and second curved parts 40 are symmetrical to one another relative to said plane of symmetry.

Preferably, each of the first and second curved parts 40 has a substantially constant curvature and is more preferably arc-shaped.

The profile support 32 has a substantially constant section, visible on Figure 2, between the first and second ends 38.

In particular, the profile support 32 comprises : a first 44 and a second 46 compartments ; and an inner wall 48, delimiting the first and second compartments. In the embodiment of Figures 1 and 2, the inner wall 48 is substantially planar. More precisely, in the embodiment of Figures 1 and 2, the inner wall 48 is substantially perpendicular to the curvatures of the first and second curved parts 40.

The first 44 and second 46 compartments respectively comprise a first 50 and a second 52 openings, extending between the first and second ends 38 of the profile support 32. At least the first opening 50 is oriented toward the curvatures of the first and second curved parts 40. Preferably, as in the embodiment of Figures 1 and 2, the first opening 50 is oriented toward the concavity of the first and second curved parts 40. In another embodiment (not shown), the first opening is oriented toward the convexity of at least a curved part.

In the embodiment of Figures 1 and 2, the profile support 32 also comprises : a first 54 and a second 56 lateral walls, substantially planar and parallel to the inner wall 48 ; and a first 60 and a second 62 top walls. The first top wall 60 extends between the inner wall 48 and the first lateral wall 54, delimiting the first compartment 44. The second top wall 62 extends between the inner wall 48 and the second lateral wall 56, delimiting the second compartment 46. The first 50 and second 52 openings are disposed opposite, respectively, the first 60 and the second 62 top walls, and are oriented toward the concavity of the first and second curved parts 40.

In the embodiment of Figures 1 and 2, the profile support 32 also comprises an abutting band 63 protruding from an end of the second lateral wall 56, opposed to the second top wall 62. The abutting band 63 is substantially perpendicular to the second lateral wall 56 and protrudes opposite the second compartment 46.

The profile support 32 has a general shape corresponding to a shape of the wall opening 16. In particular, in the embodiment of Figures 1 and 2, the abutting band 63 has a shape complementary to the edge 18 of the wall opening 16.

In an embodiment, the profile support 32 is metallic, preferably made of aluminum. In another embodiment, the profile support 32 is made of a plastic material.

The lighting element 34 is a flexible LED strip with an elongated shape. More precisely, the lighting element 34 comprises : a body 64, made of a translucent elastomer ; a plurality of LED (not shown) embedded in the body 64 ; and an electrical circuit (not shown) able to supply electricity to the plurality of LED.

The body 64 comprises a lighting face 66 extending along the elongated shape of the lighting element 34.

The body 64 of the lighting element 34 is inserted in the first compartment 44 of the profile support 32, so that the first opening 50 of said first compartment 44 opens on the lighting face 66 of said body.

Preferably, the profile support 32 comprises a first assembling organ 70 extending in the first compartment 44 between the first and second ends 38 ; and the lighting element 34 comprises a second assembling organ 72 coupled to the first assembling organ 70.

In an embodiment, the second assembling organ 72 is reversibly coupled to the first assembling organ 70, so that the lighting element 34 may be extracted from the first compartment 44, for repair or replacement.

In the embodiment of Figures 1 and 2, the first assembling organ 70 is a rib formed on the first top wall 60 ; and the second assembling organ 72 is a groove formed in the body 64, opposite the lighting face 66.

The closing band 36 has an elongated shape and is made of a deformable material such as an elastomer.

The closing band 36 is assembled to the second opening 52 so as to close the second compartment 46. More preferably, the closing band 36 is reversibly assembled to the second opening 52 so that the second compartment 46 may be alternatively closed and opened.

Preferably, the profile support 32 comprises a third assembling organ 74 extending in the second compartment 46 between the first and second ends 38 ; and the closing band 36 comprises a fourth assembling organ 76 reversibly coupled to the third assembling organ 74.

In the embodiment of Figures 1 and 2, the third assembling organ 74 comprises a pair of lips 77, each lip 77 protruding in the second compartment 46, respectively from the inner wall 48 and from the second lateral wall 56 ; and the fourth assembling organ 76 comprises a pair of opposite grooves 78. In an assembled configuration, shown on Figure 2, each of the lips 77 is received in one of the grooves 78 and the second opening 52 is obturated by the closing band 36.

In the embodiment of Figures 1 and 2, the wall 14 of the vehicle 10 and the lighting device 30 are part of a lighting assembly 80 wherein the lighting device 30 is fixed to the edge 18 of the wall opening 16.

The lighting assembly 80 also comprises at least one fastener 82, preferably a plurality of fasteners 82. In an installed configuration of the lighting assembly 80, shown on Figures 1 and 2, the wall 14 and the lighting device 30 are fixed to each other by the at least one fastener 82. More precisely, in the embodiment of Figures 1 and 2, a first face 84 of the wall 14 is fixed to the second lateral wall 56 of the profile support 32 by the fastener 82.

In the embodiment of Figures 1 and 2, the fastener 82 comprises a shaft 86 installed in through hole of the wall 14 and of the second lateral wall 56 of the profile support 32. The shaft 86 extends between a first end 88 and a second end, the first end 88 protruding in the second compartment 46. Preferably, the second end of the shaft 86 is made in one piece with a head 90 in contact with a second face 91 of the wall 14.

Preferably, the fastener 82 also comprises a coupling element 92 assembled to the first end 88 of the shaft 86 in the second compartment 46. For example, the first end 88 of the shaft is threaded and the coupling element 92 is a nut.

A method for manufacturing the lighting device 30 and installing the lighting assembly 80 will now be described. The profile support 32 is for example manufactured by extrusion of an aluminum profile, then by bending the ends of the profile to form the curved parts 40 of the profile support. The lighting element 34 and closing band 36 are manufactured by methods involving the extrusion of elastomer materials.

The second lateral wall 56 of the profile support 32 is applied against the first face 84 of the wall 14, so that the abutting band 63 is in contact with the edge 18. At least one through-hole is then pierced in the wall 14 and second lateral wall 56, and the shaft 86 of the fastener 82 is inserted in said through-hole, the head 90 abutting against the second face 91 of the wall 14.

The nut 92 is then introduced in the second compartment 46 of the profile support 32, and screwed to the first end 88 of the shaft.

The piercing of a through-hole and mounting of a corresponding fastener 82 is preferably repeated for a plurality of fasteners 82, disposed along the profile support 32 between the first and second ends 38.

In an alternate embodiment, through-holes are provided in the second lateral wall 56 of the profile support 32 before installing the lighting assembly 80.

The second assembling organ 72 of the lighting element 34 is then reversibly coupled to the first assembling organ 70 of the profile support 32. For example, the groove formed in the body 64 is coupled to the rib formed in the first top wall 60 by deformation of the body 64, or by sliding said body along the rib from an end 38 of the profile support 32.

In an alternate embodiment, the lighting element 34 and profile support 32 are coupled before assembling the profile support to the wall 14.

The fourth assembling organ 76 of the closing band 36 is then reversibly coupled to the third assembling organ 74 of the profile support 32. For example, the grooves 78 formed in the closing band 36 are coupled to the lips 77 of the profile support 32 by deformation of the closing band 36, or by sliding said closing band along the lips 77 from an end 38 of the profile support 32.

The lighting assembly 80 is then in the installed configuration described above, the wall 14 and the lighting device 30 being fixed to each other by the at least one fastener 82. The lighting face 66 of the body 64 of the lighting element is oriented toward the wall opening 16.

The electrical circuit (not shown) of the lighting element is then connected to a source of electricity, so that the plurality of LED (not shown) embedded in the body 64 is able to provide light to a passage or gangway, formed in the inner compartment 12 by the wall opening 16.

The closing band 36, closing the second compartment 46 of the profile support 32, improves the esthetics of the lighting assembly 80 by hiding the nuts 92 and the first ends 88 of the threaded shafts 86.

The invention provides a lighting assembly with a compact, bended lighting device, with a continuous lighting element without visible break.

In case the lighting device 30 needs to be removed from the wall 14 for maintenance, the closing band 36 is dissociated from the profile support 32, so as to give access to the nuts 92.

## Claims

1. Lighting assembly (80), comprising : a structural wall (14), substantially vertical ; a lighting device (30) ; and at least one fastener (82) ;
the lighting device (30) comprising : a profile support (32) of elongated shape ; and a lighting element (34) ;
the profile support (32) comprising a first (44) and a second (46) compartments separated by an inner wall (48), the first and the second compartments comprising respectively a first (50) and a second (52) openings extending along the elongated shape of the profile support (32) ;
the profile support (32) comprising at least one curved part (40) along the elongated shape ;
the profile support (32) also comprising a first (54) and a second (56) lateral walls, substantially planar and parallel to the inner wall (48) ; and a first (60) and a second (62) top wall the first top wall (60) extends between the inner wall (48) and the first lateral wall (54), delimiting the first compartment (44); and the second top wall (62) extends between the inner wall (48) and the second lateral wall (56), delimiting the second compartment (46)
the lighting element (34) being a flexible LED strip comprising a body (64) inserted in the first compartment, the body comprising a lighting face (66) arranged so as to face the first opening (50) ;
the lighting assembly (80) being **characterized in that** :
- the structural wall comprises a structural wall opening (16) defined by an edge (18), said edge comprising at least one curved part (24) ;
- the lighting device (30) is fixed to the edge (18) of the structural wall opening by the at least one fastener (82), the at least one fastener (82) comprising a shaft (86) installed in a through hole of the structural wall (14) and of the second lateral wall (56) of the profile support (32), the shaft extending between a first end (88) and a second end, the first end (88) protruding in the second compartment (46) of the profile support ; and
- the lighting device also comprises a flexible band (36) assembled to the second opening (52) so as to close the second compartment (46).

2. Lighting assembly (80) according to claim 1, wherein the first opening (50) of the lightning device (30) faces a concavity or a convexity of the at least one curved part (40) of the profile support (32).

3. Lighting assembly (80) according to claim 1 or 2, wherein the profile support (32) of the lightning device (30) comprises a first assembling organ (70) extending along the elongated shape in the first compartment (44) ; and the lighting element (34) comprises a second assembling organ (72) coupled to the first assembling organ (70) along the elongated shape.

4. Lighting assembly (80) according to claim 3, wherein one (70) of the first and second assembling organs comprises a rib and the other (72) of the first and second assembling organs comprises a groove.

5. Lighting assembly (80) according to any one of the previous claims, wherein the second opening (52) of the lightning device (30) faces a concavity or a convexity of the at least one curved part (40) of the profile support (32).

6. Lighting assembly (80) according to any one of the previous claims, wherein the profile support (32) of the lightning device (30) comprises a third assembling organ (74) extending along the elongated shape in the second compartment (46) ; and the flexible band (36) comprises a fourth assembling organ (76) coupled to the third assembling organ (74) along the elongated shape.

7. Lighting assembly (80) according to claim 6, wherein one (74) of the third and fourth assembling organs comprises a lip (77) and the other (76) of the third and fourth assembling organs comprises a groove (78).

8. Lighting assembly (80) according to any one of the previous claims, wherein the profile support (32) of the lightning device (30) is made of aluminum.

9. Vehicle (10) comprising a lighting assembly (80) according to any one of the previous claims.

## Patentansprüche

1. Beleuchtungsanordnung (80), umfassend:
eine Strukturwand (14), im Wesentlichen vertikal;
eine Beleuchtungsvorrichtung (30); und wenigstens einen Befestiger (82);
wobei die Beleuchtungsvorrichtung (30) umfasst: einen Profilträger (32) mit länglicher Form; und ein Beleuchtungselement (34);
wobei der Profilträger (32) ein erstes (44) und ein zweites (46) Fach umfasst, welche durch eine innere Wand (48) separiert sind, wobei das erste und das zweite Fach jeweils eine erste (50) und eine zweite (52) Öffnung umfassen, welche sich entlang der länglichen Form des Profilträgers (32) erstrecken;
wobei der Profilträger (32) wenigstens einen gekrümmten Abschnitt (40) entlang der länglichen Form umfasst;
wobei der Profilträger (32) auch eine erste (54) und eine zweite (56) laterale Wand umfasst, welche im Wesentlichen planar und parallel zu der inneren Wand (48) sind;
und eine erste (60) und eine zweite (62) obere Wand, wobei sich die erste obere Wand (60) zwischen der inneren Wand (48) und der ersten lateralen Wand (54) erstreckt, das erste Fach (44) begrenzend; und sich die zweite obere Wand (62) zwischen der inneren Wand (48) und der zweiten lateralen Wand (56) erstreckt, das zweite Fach (46) begrenzend;
wobei das Beleuchtungselement (34) ein flexibles LED-Band ist, welches einen Körper (64) umfasst, welcher in das erste Fach eingeführt ist, wobei der Körper eine Beleuchtungsfläche (66) umfasst, welche derart angeordnet ist, dass sie der ersten Öffnung (50) zugewandt ist;
wobei die Beleuchtungsanordnung (80) **dadurch gekennzeichnet ist, dass**:
- die Strukturwand eine Strukturwandöffnung (16) umfasst, welche durch einen Rand (18) definiert ist, wobei der Rand wenigstens einen gekrümmten Abschnitt (24) umfasst;
- die Beleuchtungsvorrichtung (30) an dem Rand (18) der Strukturwandöffnung durch den wenigstens einen Befestiger (82) fixiert ist, wobei der wenigstens eine Befestiger (82) einen Schaft (86) umfasst, welcher in einem Durchgangsloch der Strukturwand (14) und der zweiten lateralen Wand (56) des Profilträgers (32) installiert ist, wobei sich der Schaft zwischen einem ersten Ende (88) und einem zweiten Ende erstreckt, wobei das erste Ende (88) in das zweite Fach (46) des Profilträgers hervorsteht; und
- die Beleuchtungsvorrichtung auch ein flexibles Band (36) umfasst, welches derart an der zweiten Öffnung (52) angeordnet ist, dass es das zweite Fach (46) schließt.

2. Beleuchtungsanordnung (80) nach Anspruch 1, wobei die erste Öffnung (50) der Beleuchtungsvorrichtung (30) einer Konkavität oder einer Konvexität des wenigstens einen gekrümmten Abschnitts (40) des Profilträgers (32) zugewandt ist.

3. Beleuchtungsanordnung (80) nach Anspruch 1 oder 2, wobei der Profilträger (32) der Beleuchtungsvorrichtung (30) ein erstes Montageorgan (70) umfasst, welches sich entlang der länglichen Form in dem ersten Fach (44) erstreckt; und das Beleuchtungselement (34) ein zweites Montageorgan (72) umfasst, welches entlang der länglichen Form mit dem ersten Montageorgan (70) gekoppelt ist.

4. Beleuchtungsanordnung (80) nach Anspruch 3, wobei eines (70) aus dem ersten und dem zweiten Montageorgan eine Rippe umfasst und das andere (72) aus dem ersten und dem zweiten Montageorgan eine Nut umfasst.

5. Beleuchtungsanordnung (80) nach einem der vorhergehenden Ansprüche, wobei die zweite Öffnung (52) der Beleuchtungsvorrichtung (30) einer Konkavität oder einer Konvexität des wenigstens einen gekrümmten Abschnitts (40) des Profilträgers (32) zugewandt ist.

6. Beleuchtungsanordnung (80) nach einem der vorhergehenden Ansprüche, wobei der Profilträger (32) der Beleuchtungsvorrichtung (30) ein drittes Montageorgan (74) umfasst, welches sich entlang der länglichen Form in dem zweiten Fach (46) erstreckt; und das flexible Band (36) ein viertes Montageorgan (76) umfasst, welches entlang der länglichen Form mit dem dritten Montageorgan (74) gekoppelt ist.

7. Beleuchtungsanordnung (80) nach Anspruch 6, wobei eines (74) aus dem dritten und dem vierten Montageorgan eine Lippe (77) umfasst und das andere (76) aus dem dritten und dem vierten Montageorgan eine Nut (78) umfasst.

8. Beleuchtungsanordnung (80) nach einem der vorhergehenden Ansprüche, wobei der Profilträger (32) der Beleuchtungsvorrichtung (30) aus Aluminium hergestellt ist.

9. Fahrzeug (10), welches eine Beleuchtungsanordnung (80) nach einem der vorhergehenden Ansprüche umfasst.

## Revendications

1. Ensemble d'éclairage (80), comprenant : une paroi structurale (14), sensiblement verticale ; un dispositif d'éclairage (30) ; et au moins une fixation (82) ;
le dispositif d'éclairage (30) comprenant : un support profilé (32) de forme allongée ; et un élément d'éclairage (34) ;
le support profilé (32) comprenant un premier (44) et un deuxième (46) compartiment séparés par une paroi intérieure (48), le premier et le deuxième compartiment comprenant respectivement une première (50) et une deuxième (52) ouverture s'étendant le long de la forme allongée du support profilé (32) ;
le support profilé (32) comprenant au moins une partie incurvée (40) le long de la forme allongée ;
le support profilé (32) comprenant également une première (54) et une deuxième (56) paroi latérale, sensiblement planes et parallèles à la paroi intérieure (48) ; et une première (60) et une deuxième (62) paroi supérieure ; la première paroi supérieure (60) s'étend entre la paroi intérieure (48) et la première paroi latérale (54), délimitant le premier compartiment (44) ; et la deuxième paroi supérieure (62) s'étend entre la paroi intérieure (48) et la deuxième paroi latérale (56), délimitant le deuxième compartiment (46) ;
l'élément d'éclairage (34) étant une bande DEL flexible comprenant un corps (64) inséré dans le premier compartiment, le corps comprenant une face d'éclairage (66) agencée de manière à faire face à la première ouverture (50) ;
l'ensemble d'éclairage (80) étant **caractérisé en ce que** :
- la paroi structurale comprend une ouverture de paroi structurale (16) définie par un bord (18), ledit bord comprenant au moins une partie incurvée (24) ;
- le dispositif d'éclairage (30) est fixé au bord (18) de l'ouverture de paroi structurale par l'au moins une fixation (82), l'au moins une fixation (82) comprenant un arbre (86) installé dans un trou traversant de la paroi structurale (14) et de la deuxième paroi latérale (56) du support profilé (32), l'arbre s'étendant entre une première extrémité (88) et une deuxième extrémité, la première extrémité (88) faisant saillie dans le deuxième compartiment (46) du support profilé ; et
- le dispositif d'éclairage comprend également une bande flexible (36) assemblée à la deuxième ouverture (52) de manière à fermer le deuxième compartiment (46).

2. Ensemble d'éclairage (80) selon la revendication 1, dans lequel la première ouverture (50) du dispositif d'éclairage (30) fait face à une concavité ou une convexité de l'au moins une partie incurvée (40) du support profilé (32).

3. Ensemble d'éclairage (80) selon la revendication 1 ou 2, dans lequel le support profilé (32) du dispositif d'éclairage (30) comprend un premier organe d'assemblage (70) s'étendant le long de la forme allongée dans le premier compartiment (44) ; et l'élément d'éclairage (34) comprend un deuxième organe d'assemblage (72) couplé au premier organe d'assemblage (70) le long de la forme allongée.

4. Ensemble d'éclairage (80) selon la revendication 3, dans lequel l'un (70) des premier et deuxième organes d'assemblage comprend une nervure et l'autre (72) des premier et deuxième organes d'assemblage comprend une rainure.

5. Ensemble d'éclairage (80) selon l'une quelconque des revendications précédentes, dans lequel la deuxième ouverture (52) du dispositif d'éclairage (30) fait face à une concavité ou à une convexité de l'au moins une partie incurvée (40) du support profilé (32).

6. Ensemble d'éclairage (80) selon l'une quelconque des revendications précédentes, dans lequel le support profilé (32) du dispositif d'éclairage (30) comprend un troisième organe d'assemblage (74) s'étendant le long de la forme allongée dans le deuxième compartiment (46) ; et la bande flexible (36) comprend un quatrième organe d'assemblage (76) couplé au troisième organe d'assemblage (74) le long de la forme allongée.

7. Ensemble d'éclairage (80) selon la revendication 6, dans lequel l'un (74) des troisième et quatrième organes d'assemblage comprend une lèvre (77) et l'autre (76) des troisième et quatrième organes d'assemblage comprend une rainure (78).

8. Ensemble d'éclairage (80) selon l'une quelconque des revendications précédentes, dans lequel le support profilé (32) du dispositif d'éclairage (30) est en aluminium.

9. Véhicule (10) comprenant un dispositif d'éclairage (80) selon l'une quelconque des revendications précédentes.
